# EUROPEAN PATENT APPLICATION

(11) **EP 4 287 027 A1**
(43) Date of publication of application: **06.12.2023**
(21) Application number: 22176457.4
(22) Date of filing: 31.05.2022
(51) Int. Cl.: G06F 11/36

(54) **METHOD AND SYSTEM FOR GENERATING TEST CASES FOR AN ENGINEERING PROGRAM**

(71) Applicant: Siemens Aktiengesellschaft, 80333 München (DE)
(72) Inventor: MASKERI RAMA, Girish, 560095 Bangalore, Karnataka (IN)
(74) Representative: Isarpatent

(57) **Abstract**

Disclosed is a method (300), industrial environment (100) and engineering system (102) for generating test cases for an engineering program with respect to a given safety property. The method comprises generating a control flow graph of the engineering program combined with the given safety property. The method comprises determining an initial concrete state and an initial abstract state of a node in the control flow graph generating a worklist comprising one or more elements based on the determined initial concrete state and the initial abstract state, traversing each of the elements in the worklist until the worklist is empty, identifying a type of the element selected from the worklist, analyzing the selected element based on the type of the selected element, generating the one or more failing test cases for the engineering program based on the analysis when the safety property is violated, and providing the one or more failing test cases on a graphical user interface associated with a user device (120A-N).

## Description

The present invention relates to a field of engineering of computer assisted engineering programs, and more particularly relates to a method and system for generating test cases for an engineering program with respect to a given safety property.

Typically, an engineering project comprises a plurality of engineering programs. Each of the plurality of engineering programs have to be tested prior to their deployment in an industrial environment. A program tester may use a set of test cases for testing an engineering program of the engineering project. Each of the set of test cases contains a set of values which are to be assigned to one or more variables and arguments used in the engineering program during testing of the engineering program.

The testing of engineering programs in case of safety critical domains is even more important and require high level of expertise and rigorous testing. For example, testing of Programmable Logic Controllers (PLC) programs that are used are used to control various industrial equipment and field devices such as motors, switches, hydraulic valves etc. is not possible accurately and efficiently with existing solutions. PLCs are extensively used in diverse domains ranging from process industries to oil and gas to nuclear reactors. When a PLC is used in safety-related or safety critical domains, the PLC programs need to have a high level of safety and need to be rigorously tested.

In existing methods, the testing is performed manually, with developers and/or testers writing various test cases based on boundary condition and random inputs. The generation of random inputs is also known but a problem exist with such methods that it is generally guided by code coverage exploring various paths in the engineering program and exploring the minimum and maximum values of inputs based on the variable type and so forth. Such techniques are usually brute force and not directed towards testing a specified safety property. Furthermore, another major limitation such techniques is that such techniques are either not applicable for all engineering programs or are extensively time consuming for example some complex PLC programs. Another limitation to the existing methods is that such techniques do not work effectively for engineering programs comprising hidden protected parts of the code blocks having system functions and library functions, thereby some test cases are missed for such cases.

Therefore, exhaustively testing engineering programs for all possible input values is infeasible with existing methods. For instance, consider the simple example of bi-directional motors. Say it is important for safety that a motor that is rotating complete a revolution before it starts to rotate in the opposite direction. Exhaustively testing a particular safety property for all possible initial conditions and inputs would need large number of test cases which is infeasible.

In light of above, there exists a need for an efficient method and system for generating test cases for an engineering program with respect to a given safety property.

Therefore, it is an object of the present invention to provide a method and system for generating test cases for an engineering program with respect to a given safety property.

The object of the present invention is achieved by a method for generating test cases for an engineering program with respect to a given safety property. In a preferred embodiment, the method comprises receiving by a processing unit, a request to generate a plurality of test cases for an engineering program for the given safety property which comprises a set of code statements. The plurality of code statements comprises assignment statements, program element definition statements, and operation statements.

The engineering program is designed to control operation of a plurality of devices in a technical installation. Examples of the plurality of devices include but is not limited to, programmable logic controllers, computers, motor drivers, control units, microcontrollers, human machine interfaces, edge servers, and industrial control systems. The technical installation may be an industrial manufacturing plant, an industrial processing plant, or an industrial power plant.

In the preferred embodiment, the plurality of devices function together in the technical installation to achieve one or more objectives of the technical installation. Each of the plurality of devices may comprise a processing unit and a memory. The memory is configured to store the engineering program. The processing unit in the plurality of devices is configured to execute the engineering program to achieve one or more functionalities associated with the engineering program.

The method comprises generating, by the processing unit, a control flow graph of the engineering program combined with the given safety property. Herein, the control flow graph comprises one or more nodes depicting corresponding code statements in a set of code statements. In an embodiment, the method of generating the control flow graph comprises combining, by the processing unit, the engineering program with the given safety property as an assertion, wherein the assertion is a negation of the given safety property. In an embodiment, the method for generating the control flow graph of the engineering program combined with the given safety property when the engineering program is written in plurality of programming language comprises translating the engineering program to an intermediate representation and obtaining the control flow graph from the intermediate representation.

The method comprises determining, by the processing unit, an initial concrete state and an initial abstract state of node in the control flow graph. Herein, the concrete state is a fixed value for variables in the node of the control flow graph. Herein, the abstract state is one or more conditions for variables in the node of the control flow graph. The method comprises generating, by the processing unit, a worklist comprising one or more elements based on the determined initial concrete state and the initial abstract state. The method comprises traversing, by the processing unit, each of the elements in the worklist until the worklist is empty. The method comprises identifying, by the processing unit, a type of the element selected from the worklist.

The method comprises analyzing, by the processing unit, the selected element based on the type of the selected element. In an embodiment, the type of the selected elements may be any one of: an assertion node, a call function node, a non-decision node, and a decision node. In an embodiment, the method of analyzing the selected element if the type of the selected element is identified as an assertion node comprises solving, by the processing unit, one or more path constraints for each of the determined assertion nodes.

In an embodiment, the method of analyzing the selected element if the type of the selected element is identified as at least one of a call function node or a non-decision node comprises obtaining summary information for the element identified as call function or a non-decision node. The method of analyzing the call function node or the non-decision node comprises simulating the engineering program in a simulation environment using the summary information. The method comprises determining abstract state and concrete state for the identified element based on the results of the simulation. The method comprises adding the determined abstract state and the determined concrete state for the identified element to the worklist.

In an embodiment, the method of analyzing the selected element if the type of the selected element is identified is a decision node comprises generating path constraints for both branches of the identified decision node. The method comprises solving the generated path constraints for each of the branch of the decision node using concrete state values. The method comprises adding the path constraints to the worklist for the decision node if the path constraints are solved successfully.

In a further embodiment, the method of analyzing the decision node when the path constraints are not solved successfully comprises generating new path constraints both branches of the identified decision node using concrete state values. Further, the method comprises re-solving the generated new path constraints for each of the branch of the decision node using concrete state values. The method comprises adding the new path constraints to the worklist for the decision node if the path constraints are solved successfully. In an embodiment, the method comprises deleting the generated path constraints that are not feasible.

The method comprises generating, by the processing unit, the one or more failing test cases for the engineering program based on the analysis when the safety property is violated. The method comprises providing, by the processing unit, the one or more failing test cases on a graphical user interface associated with a user device.

The method for generating one or more test cases further comprises with respect to a given safety property further comprises determining, by the processing unit, one or more input variables of each of the generated one or more failing test cases for which the one or more path constraints are satisfied. The method comprises providing, by the processing unit, the input variables of each of the one or more failing test cases on the graphical user interface associated with the user device.

The method for generating one or more test cases for a given safety property further comprises automatically running the failing test cases on the engineering program for which the constraints are satisfied. The method comprises tracing the engineering program to debug the engineering program using the failing test cases.

The object of the present invention is also achieved by an engineering system for generating engineering projects compatible with a specific engineering environment. The engineering system comprises one or more processor(s) and a memory coupled to the processor(s). The memory comprises an automation module stored in the form of machine-readable instructions executable by the processor. The automation module is configured for performing the method as described above.

The object of the present invention is also achieved by an industrial environment. The industrial environment comprising an engineering system, a technical installation comprising one or more physical components, and one or more client devices communicatively coupled to the engineering system and the technical installation. The engineering system is configured to perform the above described method steps.

The object of the present invention is also achieved by a computer-program product having machine-readable instructions stored therein, that when executed by one or more processor (s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of generating test cases for an engineering program with respect to a given safety property, according to an embodiment of the present invention;
- FIG 2: is a block diagram of an engineering system, such as those shown in FIG 1, in which an embodiment of the present invention can be implemented;
- FIG 3: is a block diagram of an automation module, such as those shown in FIG 2, in which an embodiment of the present invention can be implemented;
- FIG 4: is a process flowchart illustrating an exemplary method of generating test cases for an engineering program with respect to a given safety property, according to an embodiment of the present invention;
- FIG 5: is a process flowchart illustrating an exemplary method of determining test cases when the selected element is a call function or a non-decision node, according to various embodiments of the present invention; and
- FIG 6: is a process flowchart illustrating an exemplary method of determining failing test cases when the selected element is a decision node, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

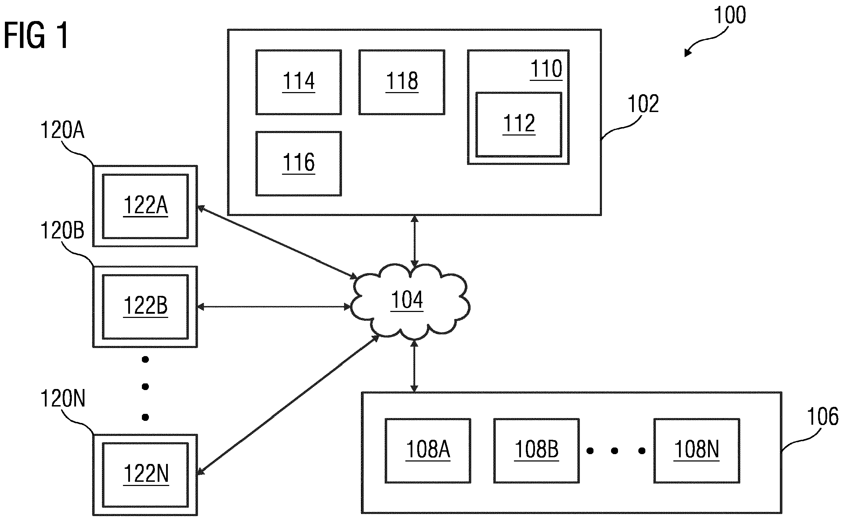

FIG 1 is a block diagram of an industrial environment 100 capable of generating test cases for an engineering program with respect to a given safety property based on a constraint satisfaction problem, according to an embodiment of the present invention. In FIG 1, the industrial environment 100 includes an engineering system 102, a technical installation 106 and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to the technical installation 106 via the network 104 (such as Local Area Network (LAN), Wide Area Network (WAN), Wi-Fi, Internet, any short range or wide range communication). The engineering system 102 is also connected to the one or more client devices 120A-N via the network 104.

The engineering system 102 is connected to one or more engineering objects 108A-N. The one or more engineering objects 108A-N are devices in the technical installation 106 connected to each other via the network 104. The one or more engineering objects 108A-N may include servers, robots, switches, automation devices, programmable logic controllers (PLC)s, human machine interfaces (HMIs), motors, valves, pumps, actuators, sensors and other industrial equipment(s).

The client devices 120A-N may be a desktop computer, laptop computer, tablet, smart phone and the like. Each of the client devices 120A-N is provided with an engineering tool 122A-N for generating and/or editing a plurality of engineering projects respectively.

The user devices 120A-N can access the engineering system 102 for automatically generating engineering projects. The user devices 120A-N can access cloud applications (such as providing performance visualization of the one or more engineering objects 108A-N via a web browser). Throughout the specification, the terms "client device" and "user device" are used interchangeably.

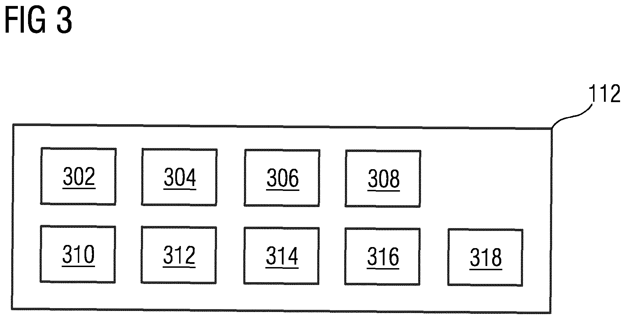

The engineering system 102 may be a standalone server or may be a remote server on a cloud computing platform. In a preferred embodiment, the engineering system 102 may be a cloud-based engineering system. The engineering system 102 is capable of delivering applications (such as cloud applications) for managing a technical installation 106 comprising the one or more engineering objects 108A-N. The engineering system 102 may comprise a platform 110 (such as a cloud computing platform), an automation module 112, a server 114 including hardware resources and an operating system (OS), a network interface 116 and a database 118. The network interface 116 enables communication between the engineering system 102, the technical installation 106, and the client device(s) 120A-N. The interface (such as cloud interface) (not shown in FIG 1) may allow the engineers at the one or more client device(s) 120AN to access engineering project files stored at the engineering system 102 and perform one or more actions on the engineering project files as same instance. The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. In an exemplary embodiment, the platform 110 may correspond to an Integrated Development Environment (IDE) comprising program editors and compilers which allow the users of the client devices 120A-N to generate engineering programs. The platform 110 may further comprise an automation module 112 configured for generating engineering programs. Details of the automation module 112 is explained in FIG 3.

The database 118 stores the information relating to the technical installation 106 and the client device(s) 120A-N. The database 118 is, for example, a structured query language (SQL) data store or a not only SQL (NoSQL) data store. In an exemplary embodiment, the database 118 may be configured as cloud-based database implemented in the industrial environment 100 where computing resources are delivered as a service over the platform 110. In another embodiment, the database 118 is a location on a file system directly accessible by the automation module 112. The database 118 is configured to store engineering project files, engineering programs, object behavior model, parameter values associated with the one or more engineering objects 108A-N, test results, simulation results, status messages, one or more simulation instances, graphical programs, program logics, program logic patterns, engineering objects 108A-N and engineering object properties, one or more engineering object blocks, relationship information between the engineering objects, requirements, program update messages and the like.

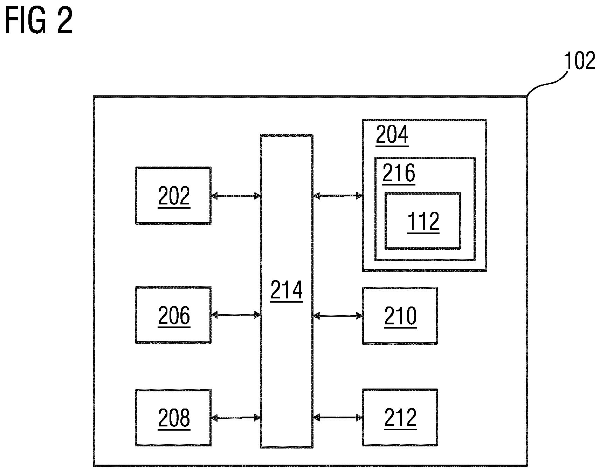

FIG 2 is a block diagram of the engineering system 102, such as those shown in FIG 1, in which an embodiment of the present invention can be implemented. In FIG 2, the engineering system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes an automation module 112 stored in the form of machine-readable instructions on any of the above-mentioned storage media and may be in communication with and executed by the processing unit 202.

When executed by the processing unit 202, the automation module 112 causes the processing unit 202 to generating test cases for an engineering program with respect to a given safety property based on a constraint satisfaction problem. The automation module 112 is configured to execute one or more programs stored in the servers 114 to cause the processing unit 202 to receive a request to generate test cases for an engineering program with respect to a given safety property based on a constraint satisfaction problem. The engineering program comprises a plurality of code statements. The plurality of code statements comprises assignment statements, program element definition statements, and operation statements. The engineering program is designed to control operation of a plurality of devices in a technical installation 106. Notably, the safety property can be understood as a requirement to be fulfilled for a particular case. The safety property in an engineering program is a type of linear time property used in verifying the feasibility of the engineering program. The safety properties are verification properties which assert that the system always stays within some allowed conditions. Any computation or input that violates a safety property reaches a bad cycle, which witnesses the violation of the safety property.

Examples of the plurality of devices include, but is not limited to, programmable logic controllers (PLCs), computers, motor drivers, control units, microcontrollers, human machine interfaces, edge servers, and industrial control systems. The technical installation 106 is at least one of an industrial manufacturing plant, an industrial processing plant, or an industrial power plant. The plurality of devices function together in the technical installation 106 to achieve one or more objectives of the technical installation 106.

The automation module 112 cause the processing unit 202 to generate a control flow graph for the engineering program combined with the given safety property. The engineering program is a program code comprising a set of code statements. The control flow graph (CFG) is generated for checking the engineering program. A control flow graph (CFG) is a representation of a program, wherein contiguous regions of the program code without branches, known as basic blocks, are represented as one or more nodes in a graph and edges between nodes indicate the possible flow of the program code. The control flow graph (CFG) comprises one or more nodes depicting corresponding code statements in the set of code statements. In particular, the control flow graph (CFG) is generated for the engineering program combined with the given safety property.

The automation module 112 cause the processing unit 202 determine an initial concrete state and an initial abstract state with respect to a first node in the control flow graph. Herein, the concrete state is a fixed value for variables in the first node of the control flow graph, and the abstract state is one or more conditions for variables in the first node of the control flow graph.

The automation module 112 cause the processing unit to generate a worklist comprising one or more elements. Herein, each of the one or more elements in the worklist comprises a node identifier, determined initial abstract state, determined initial concrete state, and a path condition for the one or more elements. Further, the automation module 112 cause the processing unit to iteratively select an element from the worklist for analyzing each of the elements until the worklist is empty.

The automation module 112 cause the processing unit to determine if the selected element is an assertion node. The automation module 112 cause the processing unit to solve one or more path constraints for each of the determined assertion nodes. The automation module 112 cause the processing unit to generate the one or more failing test cases for the engineering program for which the constraints are satisfied and the given safety property is violated. The automation module 112 cause the processing unit to determine the input variables of each of the generated one or more failing test cases for which the constraints are satisfied. Further, the automation module 112 causes the providing, by the processing unit to provide the one or more failing test cases and the input variables of each of the one or more failing test cases on a graphical user interface associated with a user device.

The storage unit 206 may be a non-transitory storage medium configured for storing a database (e.g., database 118) which comprises server version of the plurality of programming blocks associated with the set of industrial domains.

The communication interface 208 is configured for establishing communication sessions between the one or more client devices 120A-N and the engineering system 102. The communication interface 208 allows the one or more engineering applications running on the client devices 120A-N to import/export engineering project files into the engineering system 102. In an embodiment, the communication interface 208 interacts with the interface at the one or more client devices 120A-N for allowing the engineers to access the engineering programs associated with an engineering project file and perform one or more actions on the engineering programs stored in the engineering system 102.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which provides a visualization of the behavior model associated with the modified engineering programs and also displays the status information associated with each set of actions performed on the graphical user interface. The set of actions may include execution of predefined tests, download, compile and deploy of graphical programs. The bus 214 acts as interconnect between the processing unit 202, the memory 204, and the input-output unit 210.

The network interface 212 may be configured to handle network connectivity, bandwidth and network traffic between the engineering system 102, client devices 120A-N and the technical installation 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

FIG 3 is a block diagram of the automation module 112, such as those shown in FIG 1, according to an embodiment of the present invention. In FIG 3, the automation module 112 comprises a request handler module 302, a control flow graph generation module 304, a worklist generator module 306, an analysis module 308, a constraint solver module 310, a simulation module 312, a test case generator module 314, an engineering project database 316, and a debug module 318. FIG 3 is explained in conjunction with FIG 1 and FIG 2.

The request handler module 302 is configured to receive the request to generate a plurality of test cases for an engineering program with the given safety property. For example, the request is received from one of the one or more users external to the industrial environment 100 via a network. In alternative embodiment, the request is received from the one of the one or more client devices 120A-N via the network 104.

The control flow graph generation module 304 is configured to generate a control flow graph 304 from the engineering program combined with the given safety property. The workflow generation module is configured to correlate one or more nodes to the corresponding code statements in the set of code statements to generate the control flow graph for checking the engineering program.

The worklist generator module 306 is configured to generate a worklist comprising one or more elements. Herein, each of the one more elements is the worklist comprises an initial concrete state and an initial abstract state with respect to a node in the control flow graph is generated. The concrete state is a fixed value for variables in the node of the control flow graph. The abstract state is one or more conditions for variables in node of the control flow graph

The analysis module 308 is configured to analyze each of the elements in the worklist. The analysis module 308 is configured to traverse the each of the elements in the worklist until the worklist is empty. The analysis module 308 is configured to determine a type of each of the element selected from the worklist and then analyze each of the element based on the type of the selected element.

The constraint solver module 310 is configured for solving one or more path constraints for the selected element if the type of the selected element is identified as an assertion node.

The simulation module 312 is configured to simulate the engineering program in a simulation environment using the summary information if the selected element is a call function node or a non-decision node.

The test case generator module 314 is configured to generating the plurality of test cases for the engineering program with respect ot a given safety property. Each of the generated plurality of test cases contains a set of values assigned to one or more variables used in the engineering program.

The engineering project database 316 is configured to store an engineering project library comprising the engineering program. The engineering project database 310 is configured to store information about the one or more engineering objects 108A-N such as physical connections between the one or more engineering objects 108A-N, and a plurality of parameter values associated with the one or more engineering objects 108AN and the physical connections. The engineering project database 310 is configured for continuously updating the engineering project library with updated versions of the engineering projects. Also, the engineering project database 310 is configured for maintaining the engineering project library.

The debug module 318 is configured to automatically run the failing test cases on the engineering program for which the one or more constraints are satisfied and then trace the engineering program to debug the engineering program using the failing test cases.

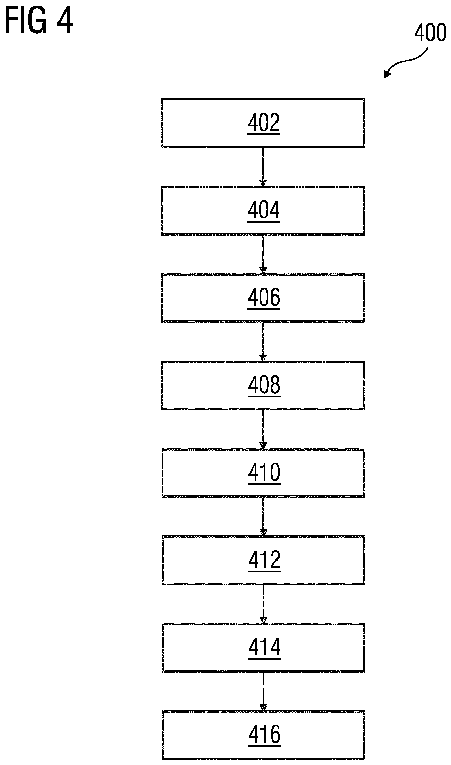

FIG 4A-B is a process flowchart illustrating an exemplary method of generating test cases for an engineering program with respect to a given safety property based on a constraint satisfaction problem, according to an embodiment of the present invention.

At step 402, a control flow graph of the engineering program combined with the given safety property is generated. Herein, the control flow graph comprises one or more nodes depicting corresponding code statements in the set of code statements. The control flow graph (CFG) is generated for checking the engineering program. A control flow graph (CFG) is a representation of a program, wherein contiguous regions of the program code without branches, known as basic blocks, are represented as one or more nodes in a graph and edges between nodes indicate the possible flow of the program code. The control flow garph (CFG) comprises one or more nodes depicting corresponding code statements in the set of code statements. In particular, the control flow graph (CFG) is generated for the engineering program combined with the given safety property. Advantageously, the control flow graph (CFG) is generated for effectively tracing the engineering program in a time-efficient manner and determining an exact address of where the safety property is violated.

According to an embodiment, the method of generating the control flow graph comprises receiving a request to generate a plurality of test cases for an engineering program for a given safety property is received by the processing unit 202. The engineering program comprises a set of code statements. The set of code statements comprises assignment statements, program element definition statements, and operation statements. The engineering program is designed to control operation of a plurality of devices in a technical installation. In a preferred embodiment, the engineering program is a programmable logic control (PLC) program code. In an example, the PLC prgram code may be written a single programming language. In another example, the PLC program code may be written in a multitude of programming language. Examples of the plurality of devices include but is not limited to, programmable logic controllers, computers, motor drivers, control units, microcontrollers, human machine interfaces, edge servers, and industrial control systems. The technical installation is at least one of an industrial manufacturing plant, an industrial processing plant, or an industrial power plant. The plurality of devices function together in the technical installation to achieve one or more objectives of the technical installation.

In an embodiment, the engineering program is combined with the given safety property as an assertion. It should be understood that the assertion is a negation of the safety property. Notably, the safety property can be understood as a requirement to be fulfilled for a particular case. The safety property is an engineering program is a type of linear time property used in verifying the feasibility of the engineering program. The safety properties are verification properties which assert that the engineering system 102 always stays within some allowed conditions. Any computation or input that violates a safety property reaches a bad cycle, which witnesses the violation of the safety property. In an example, the safety property for a vending machine maybe that the vending machine does not dispense a drink until money has been entered. In another example, the safety property for a motor maybe that the motor should complete a revolution before it starts to rotate in the opposite direction. In yet another example, the safety property maybe that the conveyor belt will remain stationary until one or more bottles mounted on top of the conveyor belt are completely filled. The violation occurs when an action is completed without one or more restrictive conditions being fulfilled.

In an embodiment, the method of combining the engineering program with the given safety property comprises cojoining the safety property at an end of the engineering program. In another embodiment, the method of combining the engineering program with the given safety property comprises inserting the given safety property at any point in the engineering program when the safety property is expressed as intermediate variables. In an example, for PLC programs when the safety property is declared inside a program block which are referred to as "intermediate variables".

In an embodiment, the method of generating the control flow graph of the engineering program combined with the given safety property when the engineering program is written in plurality of programming languages comprises translating the engineering program to an intermediate representation. Notably, an intermediate representation (IR) is a semantic representation of the engineering program (without any syntax elements). Further, the method comprises obtaining the control flow graph from the intermediate representation. In an example, in case of a PLC program, the intermediate representation is a PLusStatementList. It should be understood that a high level PLC program code written in plurality of programming languages is first complied into an intermediate representation and then is further compiled into PLC specific object/binary that runs on the device.

At step 404, an initial concrete state and an initial abstract state with respect to a node in the control flow graph is generated. The concrete state is a fixed value for variables in the node of the control flow graph. The abstract state is one or more conditions for variables in node of the control flow graph. Advantageously, the initial concrete state and the abstract state are seed for initiating the control flow graph. Notably, the initial concrete state and the abstract state is first calculated for a first node of the control flow graph and then for each of the subsequent nodes. It should be understood that values for concrete state and abstract state keep updating as the control flow graph is traversed through the consecutive nodes.

At step 406, generating, by the processing unit, a worklist comprising one or more elements. Herein, each of the one or more elements in the worklist comprises a node identifier, determined initial abstract state, determined initial concrete state, and a path condition for the one or more elements. The one or more elements in the worklist correspond to each of the nodes in the control flow graph (CFG). In an embodiment, the node identifier may be any numeric, alphabetical, alpha-numeric, character-based identification code to identify a particular node in the control flow graph. The concrete state is a fixed value for variables in the node of the control flow graph. The abstract state is one or more conditions for variables in node of the control flow graph. Notably, the path condition is a logical expression (expressions that evaluate to a boolean value such as <, >, ==, AND, OR, NOT etc. An path condition is a possible flow of control of the engineering program. Control flow statements in a control flow graph such as "if" makes a current path diverge into two different execution paths. In an example, a path in a program control flow graph can be characterized by a path condition. i.e if the path condition evaluates to true then the program run executes that particular path.

At step 408, each of the elements in the worklist is traversed until the worklist is empty. It may be understood later that elements maybe added to the worklist, updated in the worklist, and removed from the worklist based on various conditions. In an example, when a new node is added to the control flow graph, an element may be added to the worklist. In another example, when abstract state and concrete state of a particular element is determined, or new path constraint is determined, then the elements maybe updated in the worklist. In yet another example, if the particular element is analyzed, the element is removed from the worklist.

At step 410, a type of the element selected from the worklist is identified. In an embodiment, the type of element may be any one of an assertion node, call function node, non-decision node, and a decision node. For the purpose of the present disclosure, the "assertion node" corresponds to an expression that is expected to evaluate to "TRUE". Herein an expression is a particular node in the worklist. Further, the "call function node" corresponds to a 'call' statement that calls another programming block in the engineering program. In some examples, "call function node" may be a 'function' call or a 'function Block' with respect to high level PLC languages. Further, the "non-decision node" represents assignment statements where the right hand side of a statement can be any expression that evaluates to any of the types allowed ( Bit vector, Boolean etc). Further, "decision node" represents IF-THEN-ELSE statements where the control flow of the CFG depends on the evaluation of the condition expression. In an example, ff the expression evaluates to TRUE the control goes to IF statement otherwise it goes to ELSE statement.

At step 412, the selected element is analyzed based on the type of selected element. In an embodiment, the method of analyzing the selected element if the type of the selected element is identified as an assertion node comprises solving one or more path constraints for each of the determined assertion nodes. In an example, the one or more path constraints are solved using a satisfiability modulo theories (SMT) solver. As known in the art, satisfiability modulo theories (SMT) solver generalizes Boolean satisfiability (SAT) by adding equality reasoning, arithmetic, fixed-size bit-vectors, arrays, quantifiers, and other useful first-order theories. An SMT solver is a tool for deciding the satisfiability (or dually the validity) of formulas in these theories. In particular, for a PLC program, an SMT solver is used to check the satisfiability of the associated path constraint. Notably, each execution path in the control flow graph has its own path constraint that is initially true. When the SMT solver encounters a control flow statement, the true and if-else condition of the statement are conjuncted to the diverged paths respectively. It should be understood that when the selected element is an assertion node, an SMT solver is used to solve the one or more path constraints.

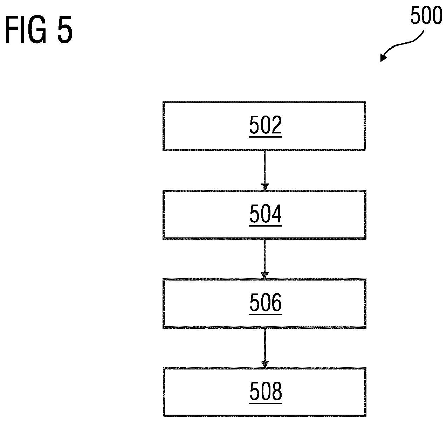

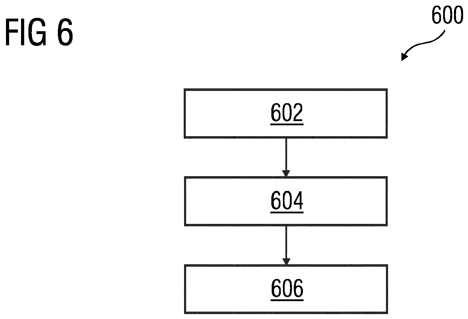

The method of analyzing the selected element if the type of the selected element is identified as at least one of a call function node or a non-decision node, and a decision node is explained later in FIG 5 and FIG 6 respectively.

At step 414, the plurality of failing test cases for the engineering program are generated based on the the analysis when the given safety property is violated. In an embodiment, when the selected element is an assertion node, the plurality of failing test cases are generated for which the one or more path constraints are satisfied and the given safety property is violated. For example, in case of a conveyor belt if the given safety property is that the conveyor belt is functional only when the bottles mounted thereon are completely filled, the test cases are generated for the particular element which would cause the conveyor belt to function without the condition being satisfied. Advantageously, the processing unit 202 is enabled to generate the test cases that have been violated by the specific safety property provided by the user.

In an embodiment, one or more input variables of each of the one or more failing test cases for which the one or more path contraints are satified are determined. The input variables are the values that led to the satifiability of the path contraint and hence the violation of the given safety properrty. Advantageoulsy, the determination of the input variables ensures that such loop holes in the engineering program that let to safety property violation can be fixed in an accurate manner.

At step 416, the one or more failing test cases are provided on the graphical user interface associated with the user device. Furthermore, the one or more input variables are also provided on the graphical user interface associated with the user device. In an embodiment, the method further comprises automatically running the failing test cases on the engineering program for which the one or more constraints are satisfied and then tracing the engineering program to debug the engineering program using the failing test cases. Advantageously, aautomatically debugging the engineering program using the failing test cases and corresponding input variables ensure that the engineering program is tested viorously and accurately for the given safety property.

FIG. 5 is a process flowchart illustrating an exemplary method 500 of determining test cases when the selected element is a call function or a non-decision node, according to various embodiments of the present invention. At step 502, summary information for the element identified as call function or a non-decision node is obtained. The summary information may be a textual or graphical information explaining the functionality of the call function or the non- decision node. The summary information may be stored in a database 118 and can be obtained by the processing unit 202 when the selected element is identified as call function or a non-decision node.

At step 504, simulating the engineering program in a simulation environment using the summary information. The processing unit 202 is capable of generating a simulation instance based on the summary information in a simulation environment. Throughout the present disclosure, the term 'simulation environment' as used herein refers to an analytical model in machine-executable form derived from at least one of a physics-based model, a data-driven model or a hybrid model associated with the asset. The simulation model may be a 1-dimensional(1D) model, a 2-dimensional(2D) model, a 3-dimensional(3D) model or a combination thereof. The simulation environment may generate one or more simulation instances based on the set of requirements. The simulation instance may be executed in a simulation environment as one of stochastic simulations, deterministic simulations, dynamic simulations, continuous simulations, discrete simulations, local simulations, distributed simulations, co-simulations or a combination thereof. It must be understood that the simulation models referred to in the present disclosure may include both system-level models and component-level models associated with the engineering system 102.

In an embodiment, the simulation instance is generated based on summary information associated with the call function node or the non-decision. In one example, the simulation instance is a digital twin of the one or more engineering objects 108AN which are functioning based on the engineering program. The processing unit 202 is configured to simulate execution of the generated engineering program in the simulation environment by executing the set of code statements on the generated simulation instance. At step 506, abstract state and concrete state is determined for the identified element based on the results of the simulation. Advantageously, the simulation environment aids in determining the concrete state and abstract state for the call function node and non-decision node in order to solve the path constraints for determining the test cases. At step 508, the determined abstract state and the determined concrete state are added for the selected element to the worklist.

FIG 6 is a process flowchart illustrating an exemplary method 600 of determining test cases when the selected element is a decision node, according to an embodiment of the present invention. At step 602, path constraints are generated for both branches of the identified decision node. In an example, if the selected element has an "if-else" condition, then it may be identified as a decision node and it may branch out into two subsequent statements. Therefore, path constraints are generated for both the branches of the decision node. At step 604, the generated path constraints are solved for each of the branch of the decision node using concrete state values. As explained earlier, the path constraints are solved using an SMT solver. At step 606, the path constraints are added to the worklist for the decision node if the path constraints are solved successfully. In case the path constraints are feasible and are successfully solved by the SMT solver, then the path constraints are added to the worklist for further analysis.

In an embodiment, if the path constraints are not solved successfully, then new path constraints are generated for both branches of the identified decision node using concrete state values. Further, the generated new path constraints for each of the branch of the decision node are re-solved using concrete state values. Subsequently, if the new path constraints are feasible and are solved successfully, then the new path constraints are added to the worklist for the decision node if the path constraints are solved successfully. In an embodiment, the generated path constraints that are not feasible are deleted. Advantageously, the system is capable of determining if a branch of the decision node is feasible or not. This helps in pruning or deleting the unreachable paths. In some examples, this may also help is terminating larger PLC programs that are not feasible.

The present invention aims to provide an engineering system 102 in an industrial environment 100 for rigorously testing high level engineering programs. In particular, the invention aims to provide an efficient method of generating failing test cases for high level PLC programs used in safety critical domains like aircrafts, turbine systems, automated machines and vehicles, medical devices, nuclear power plant and so on. Advantageously, the present invention aims at providing a method that can be used to test the engineering program for a given safety property. The present invention advantageously provide a time-efficient and high accuracy engineering system complex engineering programs as well. Moreover, the present invention provides a method that works effectively for engineering programs comprising hidden protected parts of the code blocks having system functions and library functions by simulating the engineering program for the given safety property using summary for the particular hidden system and library functions. More importantly, in some example, the present invention provides a scalable method to combining disperate threads of function summarization from static program analysis and concolic execution to handle the specific problems related to PLC programs.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of references

100 an industrial environment
102 an engineering system
120A-N one or more user devices
104 a network
108A-N one or more engineering objects
120A-N one or more client devices
110 a platform
112 an automation module
114 a server
116 a network interface
118 a database
202 a processor(s)
204 a memory
206 a storage unit
208 a communication interface
210 an input-output unit
212 a network interface
214 a bus
216 an integrated development environment (IDE)
302 request handler module
304 a control flow graph generation module
306 a worklist generator module
308 an analysis module
310 a constraint solver module
312 a simulation module
314 a test case generator module
316 an engineering project database
318 a debug module

## Claims

1. A computer-implemented method for generating test cases for an engineering program with respect to a given safety property, the method comprising:
generating, by a processing unit (202), a control flow graph of the engineering program combined with the given safety property, wherein the control flow graph comprises one or more nodes depicting corresponding code statements in a set of code statements;
determining, by the processing unit (202), an initial concrete state and an initial abstract state of a node in the control flow graph, wherein the concrete state is a fixed value for variables in the node of the control flow graph, and wherein the abstract state is one or more conditions for variables in the node of the control flow graph;
generating, by the processing unit (202), a worklist comprising one or more elements based on the determined initial concrete state and the initial abstract state;
traversing, by the processing unit (202), each of the elements in the worklist until the worklist is empty;
identifying, by the processing unit (202), a type of the element selected from the worklist;
analyzing, by the processing unit (202), the selected element based on the type of the selected element;
generating, by the processing unit (202), one or more failing test cases for the engineering program based on the analysis when the safety property is violated;
providing, by the processing unit (202), the one or more failing test cases on a graphical user interface associated with a user device (12A-N).

2. The method according to claim 1, wherein analyzing the selected element, if the type of the selected element is identified as an assertion node comprises:
solving, by the processing unit (202), one or more path constraints for each of the determined assertion nodes.

3. The method according to the claims 1 and 2, further comprising:
determining, by the processing unit (202), one or more input variables of each of the generated one or more failing test cases for which the one or more path constraints are satisfied;
providing, by the processing unit (202), the input variables of each of the one or more failing test cases on the graphical user interface associated with the user device (120AN) .

4. The method according to any of the preceding claims, wherein generating the control flow graph for the engineering program further comprises:
receiving, by a processing unit (202), a request to generate a plurality of failing test cases for an engineering program for the given safety property which comprises the set of code statements; and
combining, by the processing unit (202), the engineering program with the given safety property as an assertion, wherein the assertion is a negation of the given safety property.

5. The method according to any of the preceding claims, wherein analyzing the selected element, if the type of the selected element is identified as at least one of a call function node and a non-decision node comprises:
Obtaining, by the processing unit (202), summary information for the element identified as call function or a non-decision node;
simulating, by the processing unit (202), the engineering program in a simulation environment using the summary information;
Determining, by the processing unit (202), an abstract state and a concrete state for the identified element based on the results of the simulation;
adding, by the processing unit (202), the determined abstract state and the determined concrete state for the identified element to the worklist.

6. The method according to any of the preceding claims, wherein analyzing the selected element, if the type of the selected element is identified is a decision node comprises:
Generating, by the processing unit (202), path constraints for both branches of the identified decision node;
Solving, by the processing unit (202), the generated path constraints for each of the branch of the decision node using concrete state values; and
adding, the processing unit (202), the path constraints to the worklist for the decision node if the path constraints are solved successfully.

7. The method according to claims 1 and 6, further comprising:
Generating, by the processing unit (202), new path constraints for both branches of the identified decision node using concrete state values if the path constraints are not solved successfully;
re-solving, by the processing unit (202), the generated new path constraints for each branch of the decision node using concrete state values;
adding, by the processing unit (202), the new path constraints to the worklist for the decision node if the path constraints are solved successfully.

8. The method according to any of the claims 6 or 7, further comprising deleting the generated path constraints that are not feasible.

9. The method according to any of the preceding claims, wherein generating the control flow graph of the engineering program combined with the given safety property when the engineering program is written in plurality of programming language comprises:
translating, the processing unit (202), the engineering program to an intermediate representation; and
obtaining, by the processing unit (202), the control flow graph from the intermediate representation.

10. The method according to any of the preceding claims further comprising:
automatically running the failing test cases on the engineering program for which the constraints are satisfied;
tracing the engineering program to debug the engineering program using the failing test cases.

11. An engineering system (102) generating test cases for an engineering program with respect to a given safety property based on a constraint satisfaction problem comprises:
one or more processing units (202); and
a memory (204) coupled to the one or more processing units, wherein the memory comprises an automation module stored in the form of machine-readable instructions executable by the one or more processor(s), for performing method steps according to any of the claims 1-10.

12. An industrial environment (100) comprising:
an engineering system (102) as claimed in claim 11;
a technical installation (106) comprising one or more physical components; and
one or more client devices (120A-N) communicatively coupled to the engineering system (102) via a network (104), wherein the engineering system (102) is configured to perform a method according to any of the claims 1 to 10.

13. A computer-program product, having machine-readable instructions stored therein, that when executed by a processing units (202), cause the processing units to perform a method according to any of the claims 1-10.

14. A computer-readable storage medium comprising machine readable instructions which are readable and executable by a processing unit (202), to execute the method of one of the claims 1 to 10, when the computer readable instructions are executed by the processing unit (202).
